(19) Europäisches Patentamt / European Patent Office / Office européen des brevets

(11) **EP 2 942 753 B1**

(12) **EUROPEAN PATENT SPECIFICATION**

(45) Date of publication and mention
of the grant of the patent:
**18.07.2018 Bulletin 2018/29**

(51) Int Cl.:
***G06T 7/11*** *(2017.01)*  ***G06T 7/162*** *(2017.01)*
***G06T 7/194*** *(2017.01)*

(21) Application number: **15163752.7**

(22) Date of filing: **15.04.2015**

(54) **METHOD AND DEVICE FOR IMAGE SEGMENTATION**

VERFAHREN UND VORRICHTUNG FÜR BILDSEGMENTIERUNG

PROCÉDÉ ET DISPOSITIF DE SEGMENTATION D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.05.2014 CN 201410187226**

(43) Date of publication of application:
**11.11.2015 Bulletin 2015/46**

(73) Proprietor: **Xiaomi Inc.
Beijing (CN)**

(72) Inventors:
• **Chen, Zhijun**
  **Haidian District (CN)**
• **Qin, Qiuping**
  **Haidian District, (CN)**
• **Wang, Lin**
  **Haidian District (CN)**

(74) Representative: **Hanna Moore + Curley
Garryard House
25/26 Earlsfort Terrace
Dublin 2, D02 PX51 (IE)**

(56) References cited:
• **CHIEH-CHI KAO ET AL: "Automatic object
  segmentation with salient color model",
  MULTIMEDIA AND EXPO (ICME), 2011 IEEE
  INTERNATIONAL CONFERENCE ON, IEEE, 11
  July 2011 (2011-07-11), pages 1-6, XP031964589,
  DOI: 10.1109/ICME.2011.6011909 ISBN:
  978-1-61284-348-3**
• **ZHAOHUI WANG ET AL: "Automatic Object
  Extraction in Nature Scene Based on Visual
  Saliency and Super Pixels", 26 October 2012
  (2012-10-26), ARTIFICIAL INTELLIGENCE AND
  COMPUTATIONAL INTELLIGENCE, SPRINGER
  BERLIN HEIDELBERG, BERLIN, HEIDELBERG,
  PAGE(S) 547 - 554, XP047019437, ISBN:
  978-3-642-33477-1 * abstract * * sections "2.1.1
  Generating Visual Saliency Map", "2.2 Improved
  Watershed Algorithm", "2.3 Graph Cut Model
  Based on Saliency Map and Super-Pixels" ***

**Description**

**TECHNICAL FIELD**

The present disclosure generally relates to the field of image processing, and more particularly, to an image segmentation method and device.

**BACKGROUND**

As a base of image analysis, image editing, image synthesis and the like, image segmentation technology may segment foreground and background from an image. It is one of important research subjects at present how to quickly and automatically segment the foreground and the background from an image.

Chieh-Chi Kao et al., "Automatic object segmentation with salient color model", 2011 IEEE International Conference on Multimedia and Expo (ICME), IEEE, 11 July 2011, pages 1 - 6, DOI: 10.1109/ ICME.2011.6011909, ISBN: 978-1-61284-348-3 describes a combined detection of (colour) saliency and segmentation without user interaction. Colour models and seeds are derived from a saliency model to avoid user input. Finally, the image is segmented using the MinCut algorithm.

Zhaohui Wang et al., "Automatic Object Extraction in Nature Scene Based on Visual Saliency and Super Pixels", 26 October 2012, Artificial Intelligence and Computational Intelligence, Springer, Berlin, Heidelberg, pages 547 - 554, ISBN: 978-3-642-33477-1 describes an automatic colour-based salient object extraction in natural scenes further employing a graph cut algorithm. Over-segmentation is addressed with an improved watershed algorithm, before the final segmentation is obtained from cutting a weighted, undirected graph.

In related image segmentation methods, first of all, a foreground sample point and a background sample point of an image manually selected by a user is received; then, a foreground and background color likelihood model is established according to the foreground sample point manually selected by the user; at last, the image is segmented according to the foreground and background color likelihood model, thus acquiring the foreground and the background after segmentation.

In the process of the realization of the present disclosure, it has been found out that prior art technologies at least have the following disadvantages: in conventional image segmentation methods, a user needs to manually and roughly select a foreground sample point and a background sample point, thus the segmentation efficiency is low for segmenting a large number of images.

**SUMMARY**

The present invention provides an image segmentation method and device in accordance with the appended claims, so as to solve the problem in the prior art that a user needs to roughly and manually select the foreground sample point and the background sample point and thus the segmentation efficiency is low for segmenting a large number of images. The technical solution is as set out below:

According to the first aspect of the embodiments of the present disclosure, there is provided an image segmentation method, comprising:

> a saliency model of an image is established;
> a foreground sample point and a background sample point of the image is acquired according to the saliency model;
> a foreground and background classification model is established according to the saliency model as well as the foreground sample point and the background sample point; and
> the image is segmented according to a predefined graph cut algorithm, and specifically the image is segmented according to the predefined graph cut algorithm by using the foreground and background classification model and edge information related to pixels.

Optionally, said a foreground sample point and a background sample point of the image are acquired according to the saliency model, comprising:

> saliency values of pixels in the image are calculated according to the saliency model;
> saliency values of pixels are normalized;
> pixels whose saliency values normalized are greater than a predefined foreground threshold value are determined as the foreground sample point; and
> pixels whose saliency values normalized are smaller than a predefined background threshold value are determined as the background sample point;

wherein, the predefined foreground threshold value is greater than the predefined background threshold value, and saliency values normalized are in (0, 1).

Optionally, the foreground and background classification model comprises a foreground classification model and a background classification model. And said a foreground and background classification model is established according to the saliency model as well as the foreground sample point and the background sample point, comprising:

a foreground color likelihood model is established according to the foreground sample point;
a background color likelihood model is established according to the background sample point;
the foreground classification model is acquired by multiplying the saliency model by the foreground color likelihood model, and the foreground classification model is configured to characterize a pixel as a probability of a foreground;
the background classification model is acquired by multiplying the saliency model by the background color likelihood model, and the background classification model is configured to characterize a pixel as a probability of a background.

Said the image is segmented according to a predefined graph cut algorithm, comprising:

a foreground similarity of each pixel in the image is calculated by using the foreground classification model;
a background similarity of each pixel in the image is calculated by using the background classification model;
a similarity between adjacent pixels in the image is acquired;
an undirected graph required for the predefined graph cut algorithm is constructed by using the foreground similarity of each pixel, the background similarity of each pixel and the similarity between adjacent pixels; and
the undirected graph is segmented by using the predefined graph cut algorithm, thus completing segmentation of the image.

Said an undirected graph required for the predefined graph cut algorithm is constructed by using the foreground similarity of each pixel, the background similarity of each pixel and the similarity between adjacent pixels, comprising:

an undirected graph required for the predefined graph cut algorithm is constructed, the undirected graph comprises a first boundary between a foreground vertex, a background vertex, at least one pixel vertex and two adjacent pixel vertexes, a second boundary between the pixel vertex and the foreground vertex, and a third boundary between the pixel vertex and the background vertex, and pixel vertexes in the undirected graph are corresponding to pixels in the image;
concerning each second boundary, a foreground similarity of a pixel corresponding to a pixel vertex connected to the second boundary is determined as a weight value of the second boundary;
concerning each third boundary, a background similarity of a pixel corresponding to a pixel vertex connected to the third boundary is determined as a weight value of the third boundary; and
concerning each first boundary, a similarity between two pixels corresponding to two pixel vertexes connected to the first boundary is determined as a weight value of the first boundary.

Optionally, said a saliency model of an image is established, comprising:

over-segmentation of the image is conducted by using a predefined over-segmentation algorithm, thus acquiring at least one area, and pixels in the same area have identical color values;
a color value and a center of each of the areas are determined; and
the saliency model is established according to color values corresponding to areas and to centers of areas.

Optionally, the saliency model is:

$$S_{i1} = \sum_{j=1, j \neq i}^{N} w(R_j) D_S(R_i, R_j) D_C(R_i, R_j)$$

in which, $S_{i1}$ is the saliency value of any pixel in area $R_i$, $w(R_j)$ is the number of pixels in area $R_j$, $D_S(R_i, R_j)$ is configured to represent a metric value of difference of a spatial position between the area $R_i$ and the *area* $R_j$, $D_C(R_i, R_j)$ is configured to represent a metric value of difference of color between the area $R_i$ and the area $R_j$, N is the total number of areas acquired after over-segmentation of the image, being:

$$, \qquad D_S(R_i, R_j) \quad D_S(R_i, R_j) = \exp(-(Center(R_i) - Center(R_j))^2 / \sigma_s^2)$$

$Center(R_i)$ is the center of the area $R_i$, $Center(R_j)$ is the center of the area $R_j$, when all coordinates of pixels in the image are normalized in [0, 1], $\sigma_s^2 = 0.4$

Optionally, said a saliency model of an image is established, comprising:

pixels in the image are classified according to color values of pixels, and those pixels with the same color value are classified as the same color type; and
the saliency model is established according to the color value of each color type.

Optionally, the saliency model is:

$$S_{i2} = \sum_{j=1, j \neq i}^{N} w(P_j) D_C(P_i, P_j),$$

in which, $w(P_j)$ is the number of pixels in color type $P_j$, $D_C(P_i, P_j)$ is configured to represent a metric value of difference of color between the color type $P_i$ and the color type $P_j$ According to the second aspect of the embodiments of the present disclosure, there is provided an image segmentation device, comprising:

a first establishment module, configured to establish a saliency model of an image;
a sample acquisition module, configured to acquire a foreground sample point and a background sample point of the image according to the saliency model;
a second establishment module, configured to establish a foreground and background classification model according to the saliency model established by the first establishment module as well as the foreground sample point and the background sample point acquired by the sample acquisition module; and
an image segmentation module, configured to segment the image according to a predefined graph cut algorithm, and specifically the image is segmented according to the predefined graph cut algorithm by using the foreground and background classification model established by the second establishment module and edge information related to pixels.

Optionally, the sample acquisition module comprises:

a first calculation module, configured to calculate saliency values of pixels in the image according to the saliency model;
a normalization module, configured to normalize saliency values of pixels calculated by the calculation module;
a first determination module, configured to determine pixels whose saliency values normalized by the normalization module are greater than a predefined foreground threshold value as the foreground sample point; and
a second determination module, configured to determine pixels whose saliency values normalized by the normalization module are smaller than a predefined background threshold value as the background sample point;
wherein, the predefined foreground threshold value is greater than the predefined background threshold value, and saliency values normalized are in (0, 1).

Optionally, the foreground and background classification model comprises a foreground classification model and a background classification model, and the second establishment module comprises:

a first establishment module, configured to establish a foreground color likelihood model according to the foreground sample point;
a second establishment module, configured to establish a background color likelihood model according to the background sample point;
a first multiplication module, configured to multiply the saliency model established by the first establishment module by the foreground color likelihood model established by the first establishment module, thus acquiring the foreground classification model which is configured to characterize a pixel as the probability of a foreground; and
a second multiplication module, configured to multiply the saliency model established by the first establishment module by the background color likelihood model established by the second establishment module, thus acquiring the background classification model which is configured to characterize a pixel as probability of a background.

The image segmentation module comprises:

a second calculation module, configured to calculate a foreground similarity of each pixel in the image by using the foreground classification model;
a third calculation module, configured to calculate a background similarity of each pixel in the image by using the background classification model;
an acquisition module, configured to acquire a similarity between adjacent pixels in the image;
a construction module, configured to construct an undirected graph required for the predefined graph cut algorithm by using the foreground similarity of each pixel, the background similarity of each pixel and the similarity between adjacent pixels; and
a first segmentation module, configured to segment the undirected graph by using the predefined graph cut algorithm, thus completing the segmentation of the image.

The construction module comprises:

a construction submodule, configured to construct an undirected graph required for the predefined graph cut algorithm, the undirected graph comprises a first boundary between a foreground vertex, a background vertex, at least one pixel vertex and two adjacent pixel vertexes, a second boundary between the pixel vertex and the foreground vertex, and a third boundary between the pixel vertex and the background vertex, and pixel vertexes in the undirected graph are corresponding to pixels in the image;
a first determination submodule, configured to, concerning each second boundary, determine a foreground similarity of a pixel corresponding to a pixel vertex connected to the second boundary as a weight value of the second boundary;
a second determination submodule, configured to, concerning each third boundary, determine a background similarity of a pixel corresponding to a pixel vertex connected to the third boundary as a weight value of the third boundary; and
a third determination submodule, configured to, concerning each first boundary, determine a similarity between two pixels corresponding to two pixel vertexes connected to the first boundary as a weight value of the first boundary.

Optionally, the first construction module comprises:

a second segmentation module, configured to conduct over-segmentation of the image by using a predefined over-segmentation algorithm, thus acquiring at least one area, and pixels in the same area have identical color values;
a fourth determination module, configured to determine a color value and a center of each of the areas; and
a third establishment module, configured to establish the saliency model according to color values corresponding to areas and to centers of areas.

Optionally, the saliency model is:

$$S_{i1} = \sum_{j=1, j \neq i}^{N} w(R_j) D_S(R_i, R_j) D_C(R_i, R_j) \ ,$$

in which, $S_{i1}$ is the saliency value of any pixel in area $R_i$, $w(R_j)$ is the number of pixels in area $R_j$, $D_S(R_i, R_j)$ is configured to represent a metric value of difference of a spatial position between the area $R_i$ and the area $Rj$, $D_C(R_i, R_j)$ is configured to represent a metric value of difference of color between the area $R_i$ and the area $R_j$, N is the total number of areas acquired after over-segmentation of the image, being:

$$, \quad D_S(R_i, R_j) \quad D_S(R_i, R_j) = \exp(-(Center(R_i) - Center(R_j))^2 / \sigma_s^2)$$

$Center(R_i)$ is the center of the area $R_i$, $Center(R_j)$ is the center of the area $R_j$, when all coordinates of pixels in the image are normalized in [0, 1], $\sigma_s^2 = 0.4$

Optionally, the first establishment module comprises:

a classification module, configured to classify pixels in the image according to color values of pixels, and those pixels with the same color value are classified as the same color type; and

a fourth establishment module, configured to establish the saliency model according to the color value of each color type.

Optionally, the saliency model is:

$$S_{i2} = \sum_{j=1, j \neq i}^{i\cdot i} w(P_j) D_C(P_i, P_j) \ ,$$

in which, $w(P_j)$ is the number of pixels in color type $P_j$, $D_C(P_i, P_j)$ is configured to represent a metric value of difference of color between the color type $P_i$ and the color type $P_j$.

According to an example, there is provided an image segmentation device, comprising:

a processor;

a memory configured to store instructions executable by the processor;

wherein, the processor is configured to:

establish a saliency model of an image;

acquire a foreground sample point and a background sample point of the image according to the saliency model;

establish a foreground and background classification model according to the saliency model as well as the foreground sample point and the background sample point; and

segment the image according to a predefined graph cut algorithm, and specifically the image is segmented according to the predefined graph cut algorithm by using the foreground and background classification model and edge information related to pixels.

The technical solution according to embodiments of the present disclosure may have the following beneficial effects:

A foreground and background classification model is established by automatically determining a foreground sample point and a background sample point and by combining a saliency model as well as the foreground sample point and the background sample point, and image segmentation is achieved by using the foreground and background classification model; such a problem in the related technologies is solved that a user needs to manually and roughly select the foreground sample point and the background sample point and thus the segmentation efficiency is low for segmenting a large number of images; automatic selection of samples is realized and the accuracy of classification is improved because it is available for automatic acquisition of a foreground sample point and an automatic sample point and a transcendental saliency model is combined for establishing a foreground and background classification model.

It will be appreciated that both the foregoing general description and the following detailed description are exemplary and explanatory only.

## BRIEF DESCRIPTION OF THE DRAWINGS

The accompanying drawings, which are incorporated in and constitute a part of this specification, illustrate embodiments consistent with the invention and, together with the description, serve to explain the principles of the invention.

Fig. 1 is a flow chart showing an image segmentation method according to an exemplary embodiment.

Fig. 2A is a flow chart showing an image segmentation method according to another exemplary embodiment.

Fig. 2B is a flow chart showing how to establish a saliency model of an image according to an exemplary embodiment.

Fig. 2C is a flow chart showing how to establish a saliency model of an image according to another exemplary embodiment.

Fig. 2D is a flow chart showing how to construct an undirected graph according to an exemplary embodiment.

Fig. 2E is a schematic diagram showing an undirected graph according to an exemplary embodiment.

Fig. 3 is a block diagram of an image segmentation device according to an exemplary embodiment.

Fig. 4 is a block diagram of an image segmentation device according to another exemplary embodiment.

Fig. 5 is a block diagram of an image segmentation device according to a further exemplary embodiment.

## DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The electronic equipment herein may be a smart mobile phone, a tablet computer, a smart television, an ebook reader, a MP3 (Moving Picture Experts Group Audio Layer III) player, a MP4 (Moving Picture Experts Group Audio Layer IV) player, a laptop computer, a desktop computer and the like.

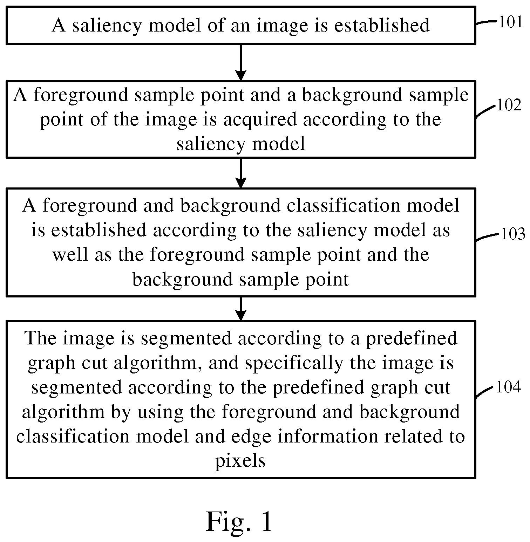

Fig. 1 is a flow chart showing an image segmentation method according to an exemplary embodiment, as shown in Fig.1, the image segmentation method is applied to an electronic equipment, comprising following steps:

In Step 101, a saliency model of an image is established.

In Step 102, a foreground sample point and a background sample point of the image is acquired according to the saliency model.

In Step 103, a foreground and background classification model is established according to the saliency model as well as the foreground sample point and the background sample point.

In Step 104, the image is segmented according to a predefined graph cut algorithm, and specifically the image is segmented according to the predefined graph cut algorithm by using the foreground and background classification model and edge information related to pixels.

In conclusion, in the image segmentation method according to the embodiments of the present disclosure, a foreground and background classification model is established by automatically determining a foreground sample point and a background sample point and by combining a saliency model and the foreground sample point and the background sample point, and image segmentation is achieved by using the foreground and background classification model; such a problem in the related technologies is solved that a user needs to manually and roughly select the foreground sample point and the background sample point and thus the segmentation efficiency is low for segmenting a large number of images; automatic selection of samples is realized and the accuracy of classification is improved because it is available for automatic acquisition of a foreground sample point and an automatic sample point and a transcendental saliency model is combined for establishing a foreground and background classification model.

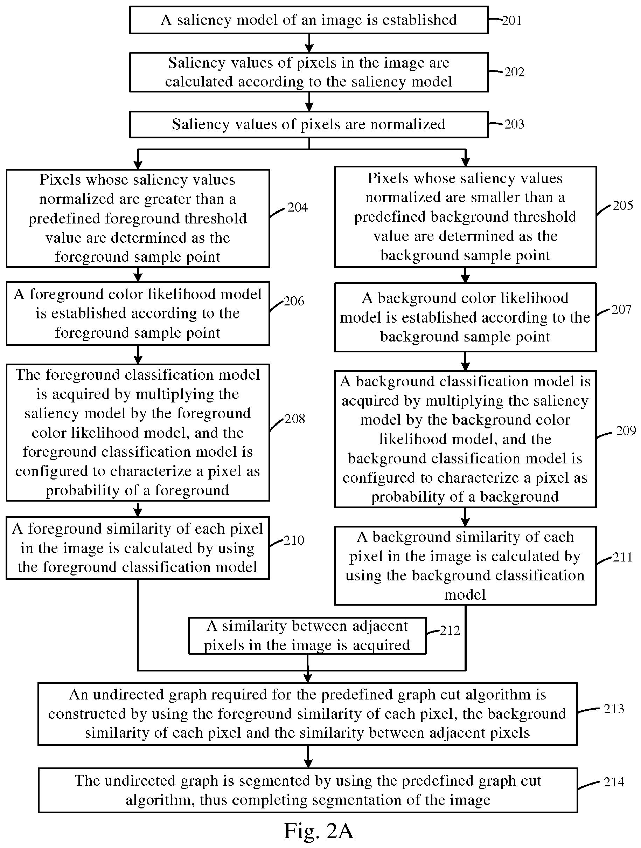

Fig. 2A is a flow chart showing an image segmentation method according to another exemplary embodiment, as shown in Fig. 2A, the image segmentation method is applied to an electronic equipment, comprising following steps:

In Step 201, a saliency model of an image is established.

In practical application, the saliency model of an image may be established in a variety of ways, specifically as follows:

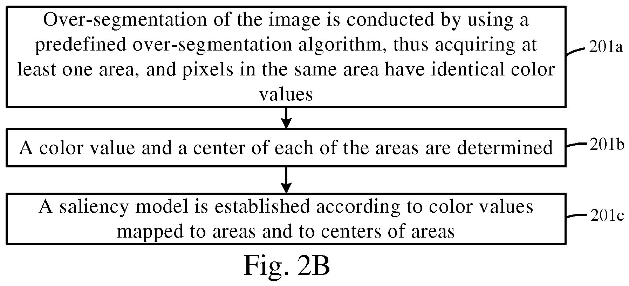

In the first way, referring to Fig. 2B, a flow chart showing how to establish a saliency model of an image according to an exemplary embodiment, comprising:

In substep 201a, over-segmentation of the image is conducted by using a predefined over-segmentation algorithm, thus acquiring at least one area, and pixels in the same area have identical color values.

Over-segmentation of an image means segmenting the image into different areas, and pixels in each of the areas have the same or similar feature, for example, pixels in a certain area after over-segmentation have the same or approximate color value.

The over-segmentation algorithm employed herein is an over-segmentation algorithm based on mean shift. In practical application, other over-segmentation algorithms may be used, such as an over-segmentation algorithm based on watershed, and an over-segmentation algorithm based on ultrapixel clustering, etc. The embodiment makes no restriction on over-segmentation algorithms.

In substep 201b, a color value and a center of each of the areas are determined;

As pixels in an area after over-segmentation have the same color value, it is possible to determine the color value of the area, and the center of the area also may be calculated.

In substep 201c, a saliency model is established according to color values corresponding to areas and to centers of areas.

The saliency model established according to substeps 201a-201c may be:

$$S_{i1} = \sum_{j=1, j \neq i}^{N} w(R_j) D_S(R_i, R_j) D_C(R_i, R_j) \quad,$$

in which, $S_{i1}$ is the saliency value of any pixel in area $R_i$, $w(R_j)$ is the number of pixels in area $R_j$, $D_S(R_i, R_j)$ is configured to represent a metric value of difference of a spatial position between the area $R_i$ and the area $R_j$, $D_C(R_i, R_j)$ is configured to represent a metric value of difference of color between the area $R_i$ and the area $R_j$, N is the total number of areas acquired after over-segmentation of the image, being:

$$D_S(R_i, R_j) \quad D_S(R_i, R_j) = \exp(-(Center(R_i) - Center(R_j))^2 / \sigma_s^2)$$

$Center(R_i)$ is the center of the area $R_i$, $Center(R_j)$ is the center of the area $R_j$, when all coordinates of pixels in the image are normalized in [0, 1], $\sigma_s^2 = 0.4$

$D_C(R_i, R_j)$ may be represented by Euclidean distance between an average color value of the area $R_i$ and an average color value of the area $R_j$. The average color value of an area is acquired by dividing the sum of color values of pixels in the area by the total number of pixels in the area. In ideal conditions, the color values of different pixels in an area are the same, under the circumstances, the color value of the area is a color value of a pixel thereinto. However, in practical application, the color values of different pixels in the same area are not exactly the same. Usually, color values of different pixels are quite approximate, under the circumstances, the average color value of the area is acquired by dividing the sum of color values of pixels in the area by the total number of pixels in the area.

It may be known from the composition of the saliency model that, the saliency model may be configured to characterize that saliency values of pixels in each of areas may be influenced by other areas in the image.

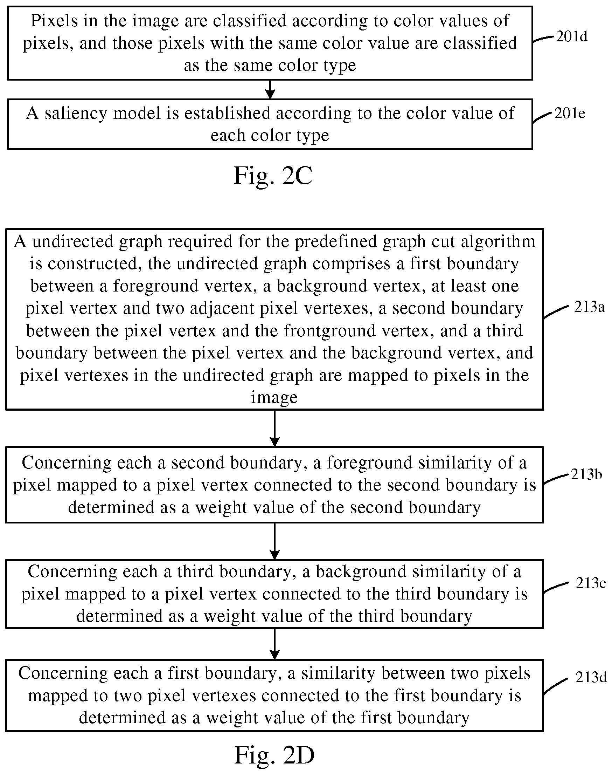

In the second way, referring to Fig. 2C, there is provided a flow chart showing how to establish a saliency model of an image according to another exemplary embodiment, comprising:

In substep 201d, pixels in the image are classified according to color values of pixels, and those pixels with the same color value are classified as the same color type.

In practical application, a storage space (for example, a storage queue or a storage stack and the like) corresponding to a color value and configured to store pixels may be set, the number of the storage space may be 256*256*256, pixels in the image are read out successively, and the pixels are stored in the storage space corresponding to color values of the pixels, in this way, color values of pixels stored in each of storage spaces are the same.

After pixels in the image are read out, a statistics of the number of pixels stored in each of storage spaces is conducted.

In substep 201e, a saliency model is established according to the color value of each color type.

The saliency model established according to the color value of each color type is:

$$S_{i2} = \sum_{j=1, j \neq i}^{N} w(P_j) D_C(P_i, P_j) \ ,$$

in which, $w(P_j)$ is the number of pixels in color type $P_j$, $D_C(P_i, P_j)$ is configured to represent a metric value of difference of color between the color type $P_i$ and the color type $P_j$. It should be explained that in practical application, after pixels in the image are classified according to substep 201d, the number of pixels corresponding to the same color type may be very few, color of these pixels has little impact on saliency values of color of other pixels. Therefore, in a possible implementation, in order to reduce calculated amount, color types with more pixels may be selected for establishing a saliency model.

In Step 202, saliency values of pixels in the image are calculated according to the saliency model.

In Step 203, saliency values of pixels are normalized.

Usually, saliency values of pixels are normalized in (0, 1).

In Step 204, pixels whose saliency values normalized are greater than a predefined foreground threshold value are determined as the foreground sample point.

The predefined foreground threshold value may be set according to the actual situation when saliency values of pixels are normalized in (0, 1), for example, the predefined foreground threshold value may be set as 0.8.

In Step 205, pixels whose saliency values normalized are smaller than a predefined background threshold value are determined as the background sample point.

The predefined foreground threshold value may be set according to the actual situation when saliency values of pixels are normalized in (0, 1), for example, the predefined foreground threshold value may be set as 0.25.

Normally, the predefined foreground threshold value is greater than the predefined background threshold value.

In this way, a foreground sample point and a background sample point may be automatically determined according to the saliency model established.

In Step 206, a foreground color likelihood model is established according to the foreground sample point.

In practical application, there are many ways to establish the color likelihood model, for example, the color likelihood model may be established by means of a mathematical modeling based on histogram statistic or by means of Gaussian mixture model. If the sample point for establishing the color likelihood model is the foreground sample point, the color likelihood model acquired is determined as a foreground color likelihood model.

In Step 207, a background color likelihood model is established according to the background sample point.

Similarly, the color likelihood model may be established by means of a mathematical modeling based on histogram statistic or by means of Gaussian mixture model. If the sample point for establishing the color likelihood model is the background sample point, the color likelihood model acquired is determined as a background color likelihood model.

In Step 208, the foreground classification model is acquired by multiplying the saliency model by the foreground color likelihood model, and the foreground classification model is configured to characterize a pixel as the probability of a foreground.

In order to enhance the accuracy in segmentation of a foreground of an image, the foreground classification model may be acquired by combination of a transcendental saliency model and an enhanced foreground color likelihood model, for example, the foreground classification model may be acquired by multiplying the saliency model by the foreground color likelihood model.

In Step 209, a background classification model is acquired by multiplying the saliency model by the background color likelihood model, and the background classification model is configured to characterize a pixel as the probability of a background.

Similarly, in order to enhance the accuracy in segmentation of a background of an image, the background classification model may be acquired by combination of a transcendental saliency model and an enhanced background color likelihood model, for example, the background classification model may be acquired by multiplying the saliency model by the background color likelihood model.

In Step 210, a foreground similarity of each pixel in an image is calculated by using the foreground classification model.

As the foreground classification model is used to characterize a pixel as probability of a foreground (i.e., the similarity between the pixel and the foreground), the foreground classification model may be directly used to calculate the foreground similarity of each pixel in the image.

In Step 211, a background similarity of each pixel in the image is calculated by using the background classification model.

Similarly, as the background classification model is configured to characterize a pixel as probability of a background (i.e., the similarity between the pixel and the background), the background classification model may be directly configured to calculate the background similarity of each pixel in the image.

In Step 212, a similarity between adjacent pixels in an image is acquired.

In Step 213, an undirected graph required for the predefined graph cut algorithm is constructed by using the foreground similarity of each pixel, the background similarity of each pixel and the similarity between adjacent pixels.

Please see Fig.2D, a flow chart for constructing an undirected graph according to an exemplary embodiment, the undirected graph required for the predefined graph cut algorithm is constructed by using the foreground similarity of each pixel, the background similarity of each pixel and the similarity between adjacent pixels, comprising:

In substep 213a, the undirected graph required for the predefined graph cut algorithm is constructed, the undirected graph comprises a first boundary between a foreground vertex, a background vertex, at least one pixel vertex and two adjacent pixel vertexes, a second boundary between the pixel vertex and the foreground vertex, and a third boundary between the pixel vertex and the background vertex, and pixel vertexes in the undirected graph are corresponding to pixels in the image.

Pixel vertexes in the undirected graph are acquired by mapping to pixels in the image, i.e., the number of pixels in the image is equal to that of pixel vertexes in the undirected graph constructed, each pixel is corresponding to a pixel vertex, and each pixel vertex is corresponding to a pixel.

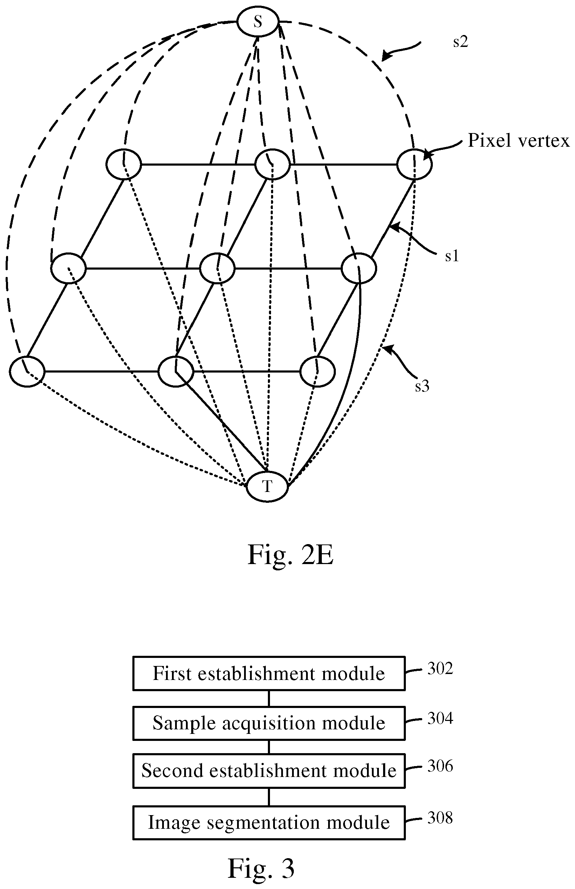

Please see Fig.2E, a schematic diagram showing an undirected graph according to an exemplary embodiment, the undirected graph comprises pixel vertexes which are corresponding to pixels in the image, for the sake of simplification, only nine pixel vertexes are shown herein. The undirected graph also comprises a foreground vertex S and a background vertex T, wherein, a first boundary s1 is formed by connection of pixel vertexes, a second boundary s2 is formed by connection of the foreground vertex S with any pixel vertex, and a third boundary s3 is formed by connection of the background vertex T with any pixel vertex.

In substep 213b, concerning each second boundary, a foreground similarity of a pixel corresponding to a pixel vertex connected to the second boundary is determined as a weight value of the second boundary.

For example, concerning a pixel vertex selected, a pixel corresponding to the pixel vertex may be determined, and the foreground similarity of the pixel is regarded as the weight value of the second boundary between the pixel vertex and the foreground vertex.

In substep 213c, concerning each third boundary, a background similarity of a pixel corresponding to a pixel vertex connected to the third boundary is determined as a weight value of the third boundary.

For example, concerning a pixel vertex selected, a pixel corresponding to the pixel vertex may be determined, and the background similarity of the pixel is regarded as the weight value of the third boundary between the pixel vertex and the background vertex.

In substep 213d, concerning each first boundary, a similarity between two pixels corresponding to two pixel vertexes connected to the first boundary is determined as a weight value of the first boundary.

In Step 214, the undirected graph is segmented by using the predefined graph cut algorithm, thus completing segmentation of the image.

The predefined graph cut algorithm may be a graph cut algorithm, which is configured to segment an image by using the foregoing undirected graph constructed by Step 213. It is achievable for those skilled in the art to segment an undirected graph by using a graph cut algorithm, not elaborated herein.

In conclusion, in the image segmentation method according to the embodiments of the present disclosure, a foreground and background classification model is established by automatically determining a foreground sample point and a background sample point and by combining a saliency model and the foreground sample point and background sample point, and image segmentation is achieved by using the foreground and background classification model; such a problem in the related technologies is solved that a user needs to manually and roughly select the foreground sample point and the background sample point and thus the segmentation efficiency is low for segmenting a large number of images; automatic selection of samples is realized and the accuracy of classification is improved because it is available for automatic acquisition of a foreground sample point and an automatic sample point and a transcendental saliency model is combined for establishing a foreground and background classification model.

The following is the embodiment of the device in the present disclosure, which may be configured to execute the embodiment of the method in the present disclosure. Please refer to the embodiment of the method in the present disclosure with regard to undisclosed details about the embodiment of the device in the present disclosure.

Fig. 3 is a block diagram showing an image segmentation device according to an exemplary embodiment, as shown in Fig.3, the image segmentation device is applied to an electronic equipment, including but not limited to: a first establishment module 302, a sample acquisition module 304, a second establishment module 306 and an image segmentation module 308.

The first establishment module 302 is configured to establish a saliency model of an image.

The sample acquisition module 304 is configured to acquire a foreground sample point and a background sample point of an image according to a saliency model.

The second establishment module 306 is configured to establish a foreground and background classification model according to the saliency model established by the first establishment module as well as the foreground sample point and the background sample point acquired by the sample acquisition module.

The image segmentation module 308 is configured to segment an image according to a predefined graph cut algorithm, and specifically the image is segmented according to the predefined graph cut algorithm by using the foreground and background classification model established by the second establishment module and edge information related to pixels.

In conclusion, in the image segmentation device according to the embodiments of the present disclosure, a foreground and background classification model is established by automatically determining a foreground sample point and a background sample point and by combining a saliency model, and image segmentation is achieved by using the foreground and background classification model; such a problem in the related technologies is solved that a user needs to manually and roughly select the foreground sample point and the background sample point and thus the segmentation efficiency is low for segmenting a large number of images; automatic selection of samples is realized and the accuracy of classification is improved because it is available for automatic acquisition of a foreground sample point and an automatic sample point and a transcendental saliency model is combined for establishing a foreground and background classification model.

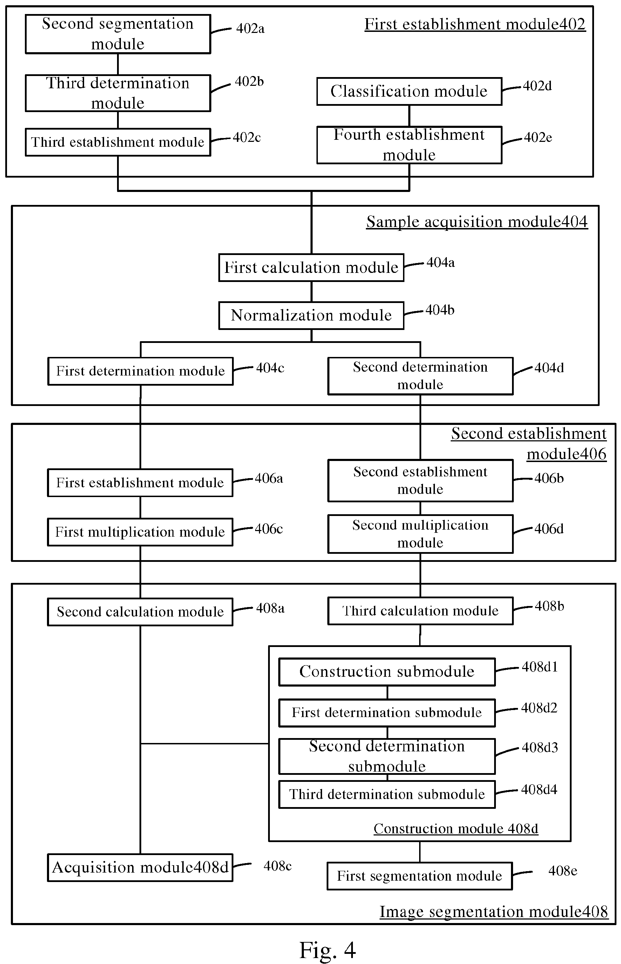

Fig. 4 is a block diagram showing an image segmentation device according to another exemplary embodiment, as shown in Fig.4, the image segmentation device is applied to an electronic equipment, including but not limited to: a first establishment module 402, a sample acquisition module 404, a second establishment module 406 and an image segmentation module 408.

The first establishment module 402 is configured to establish a saliency model of an image.

The sample acquisition module 404 is configured to acquire a foreground sample point and a background sample point of the image according to the saliency model.

The second establishment module 406 is configured to establish a foreground and background classification model according to the saliency model established by the first establishment module 402 as well as the foreground sample point and the background sample point acquired by the sample acquisition module 404.

The image segmentation module 408 is configured to segment an image according to a predefined graph cut algorithm, and specifically the image is segmented according to the predefined graph cut algorithm by using the foreground and background classification model established by the second establishment module 406 and edge information related to pixels.

In the first possible implementation in an embodiment as shown in Fig.4, the sample acquisition module 404 may comprise: a first calculation module 404a, a normalization module 404b, a first determination module 404c and a second determination module 404d.

The first calculation module 404a is configured to calculate saliency values of pixels in the image according to the saliency model.

The normalization module 404b is configured to normalize saliency values of pixels calculated by the first calculation module 404a.

The first determination module 404c is configured to determine pixels whose saliency values normalized by the normalization module 404b are greater than the predefined foreground threshold value as the foreground sample point.

The second determination module 404d is configured to determine pixels whose saliency values normalized by the normalization module 404b are smaller than the predefined background threshold value as the background sample point.

wherein, the predefined foreground threshold value is greater than the predefined background threshold value, and saliency values normalized are in (0, 1).

In the second possible implementation in an embodiment as shown in Fig.4, the foreground and background classification model comprises a foreground classification model and a background classification model, and the second establishment module 406 may comprise: a first establishment module 406a, a second establishment module 406b, a first multiplication module 406c and a second multiplication module 406d.

The first establishment module 406a is configured to establish a foreground color likelihood model according to the foreground sample point.

The second establishment module 406b is configured to establish a background color likelihood model according to the background sample point.

The first multiplication module 406c is configured to multiply the saliency model established by the first establishment module 402 by the foreground color likelihood model established by the first establishment module 406a, thus acquiring the foreground classification model which is configured to characterize a pixel as probability of a foreground.

The second multiplication module 406d is configured to multiply the saliency model established by the first establishment module 402 by the background color likelihood model established by the second establishment module 406b, thus acquiring the background classification model which is configured to characterize a pixel as probability of a background.

In the third possible implementation in an embodiment as shown in Fig.4, the image segmentation module 408 may comprise: a second calculation module 408a, a third calculation module 408b, an acquisition module 408c, a construction module 408d and a first segmentation module 408e.

The second calculation module 408a is configured to calculate the foreground similarity of each pixel in the image by using the foreground classification model.

The third calculation module 408b is configured to calculate the background similarity of each pixel in the image by using the background classification model.

The acquisition module 408c is configured to acquire the similarity between adjacent pixels in the image.

The construction module 408d is configured to construct an undirected graph required for the predefined graph cut algorithm by using the foreground similarity of each pixel, the background similarity of each pixel and the similarity between adjacent pixels.

The first segmentation module 408e is configured to segment the undirected graph by using the predefined graph cut algorithm, thus completing the segmentation of the image.

In the fourth possible implementation in an embodiment as shown in Fig.4, the construction module 408d may comprise: a construction submodule 408d, a first determination submodule 408d2, a second determination submodule 408d3 and a third determination submodule 408d4.

The construction submodule 408d1 is configured to construct an undirected graph required for the predefined graph cut algorithm, the undirected graph comprises a first boundary between a foreground vertex, a background vertex, at least one pixel vertex and two adjacent pixel vertexes, a second boundary between the pixel vertex and the foreground vertex, and a third boundary between the pixel vertex and the background vertex, and pixel vertexes in the undirected graph are corresponding to pixels in the image.

The first determination submodule 408d2 is configured to, concerning each second boundary, determine the foreground similarity of a pixel corresponding to a pixel vertex connected to the second boundary as a weight value of the second boundary.

The second determination submodule 408d3 is configured to, concerning each third boundary, determine the background similarity of a pixel corresponding to a pixel vertex connected to the third boundary as the weight value of the third boundary.

The third determination submodule 408d4 is configured to, concerning each first boundary, determine the similarity between two pixels corresponding to two pixel vertexes connected to the first boundary as the weight value of the first boundary.

In the fifth possible implementation in an embodiment as shown in Fig.4, the first establishment module 402 may comprise: a second segmentation module 402a, a fourth determination module 402b and a third establishment module 402c.

The second segmentation module 402a is configured to conduct over-segmentation of the image by using a predefined over-segmentation algorithm, thus acquiring at least one area, and pixels in the same area have identical color values.

The fourth determination module 402b is configured to determine a color value and a center of each of the areas.

The third establishment module 402c is configured to establish the saliency model according to color values corresponding to areas and to centers of areas.

In the sixth possible implementation in an embodiment as shown in Fig.4, the saliency model is:

$$S_{i1} = \sum_{j=1, j \neq i}^{N} w(R_j) D_S(R_i, R_j) D_C(R_i, R_j)$$

in which, $S_{i1}$ is the saliency value of any pixel in area $R_i$, $w(R_j)$ is the number of pixels in area $R_j$, $D_S(R_i, R_j)$ is configured to represent a metric value of difference of a spatial position between the area $R_i$ and the area $R_j$, $D_C(R_i, R_j)$ is configured to represent a metric value of difference of color between the area $R_i$ and the area $R_j$, N is the total number of areas acquired after over-segmentation of the image,
being:

$$D_S(R_i, R_j) \quad D_S(R_i, R_j) = \exp(-(Center(R_i) - Center(R_j))^2 / \sigma_s^2)$$

$Center(R_i)$ is the center of the area $R_i$, $Center(R_j)$ is the center of the area $R_j$, when all coordinates of pixels in the image are normalized in [0, 1], $\sigma_s^2 = 0.4$

In the seventh possible implementation in an embodiment as shown in Fig.4, the first establishment module 402 may comprise: a classification module 402d and a fourth establishment module 402e.

The classification module 402d is configured to classify pixels in the image according to color values of pixels, and those pixels with the same color value are classified as the same color type.

The fourth establishment module 402e is configured to establish the saliency model according to the color value of each color type.

In the eighth possible implementation in an embodiment as shown in Fig.4, the saliency model is:

$$S_{i2} = \sum_{j=1, j \neq i} w(P_j) D_C(P_i, P_j)$$

in which, $w(P_j)$ is the number of pixels in color type $P_j$, $D_C(P_i, P_j)$ is configured to represent a metric value of difference of color between the color type $P_i$ and the color type $P_j$. In conclusion, in the image segmentation method according to the embodiments of the present disclosure, a foreground and background classification model is established by automatically determining a foreground sample point and a background sample point and by combining a saliency model, and image segmentation is achieved by using the foreground and background classification model; such a problem in the related technologies is solved that a user needs to manually and roughly select the foreground sample point and the background sample point and thus the segmentation efficiency is low for segmenting a large number of images; automatic selection of samples is realized and the accuracy of classification is improved because it is available for automatic acquisition of a foreground sample point and an automatic sample point and a transcendental saliency model is combined for establishing a foreground and background classification model.

With regard to the device in the above embodiment, detailed description of specific modes for executing operation of modules has been made in the embodiment of the method, no detailed illustration will be made herein.

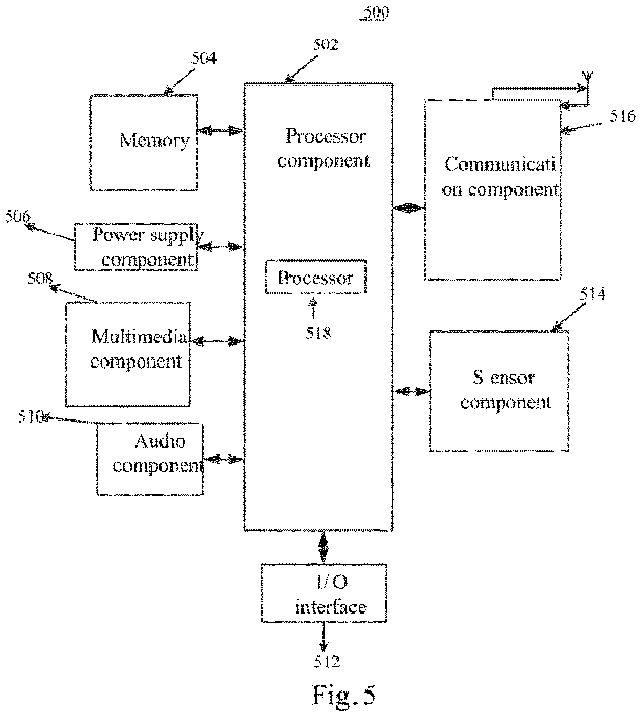

Fig. 5 is a block diagram of an image segmentation device 500 according to an exemplary embodiment. For example, the device 500 may be a mobile telephone, a computer, a digital broadcasting terminal, a message transceiver device, a games console, a tablet device, a medical device, a fitness facility, a PDA (personal digital assistant) and the like.

Referring to Fig.5, the device 500 may comprise one or a plurality of components as below: a processor component 502, a memory 504, a power supply component 506, a multimedia component 508, an audio component 510, an input/output (I/O) interface 512, a sensor component 514 and a communication component 516.

The processor component 502 usually controls the overall operation of the device 500, for example, display, telephone call, data communication, and operation associated with camera operation and record operation. The processor component 502 may comprise one or a plurality of processors 518 for executing instructions so as to complete steps of above method in part or in whole. In addition, the processor component 502 may comprise one or a plurality of modules for the convenience of interaction between the processor component 502 and other components. For example, the processor component 502 may comprise a multimedia component for the convenience of interaction between the multimedia component 508 and the processor component 502.

The memory 504 is configured to store data of different types so as to support the operation of the device 500. Examples of the data include any application program or approach directive for operation of the device 500, including contact data, phonebook data, message, picture and video, etc. The memory 504 may be realized by volatile or non-volatile memory device of any type or combination thereof, for example, static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

The power supply component 506 provides power for components of the device 500. The power supply component 506 may comprise a power management system, one or a plurality of power supplies, and other components associated with power generation, management and distribution of the device 500.

The multimedia component 508 comprises a screen between the device 500 and a user and for providing an output interface. In some embodiments, the screen may comprise an LCD (Liquid Crystal Display) and a touch panel (TP). If the screen comprises a touch panel, the screen may be realized as a touch screen for receiving input signal from users. The touch panel comprises one or a plurality of touch sensors for sensing gestures on the touch panel, for example, touching and sliding, etc. The touch sensor not only can sensor trip boundary of touching or sliding, but also can detect the duration and pressure related to the touching or sliding operation. In some embodiments, the multimedia component 508 comprises a front-facing camera and/or a rear-facing camera. When the device 500 is under an operation mode, for example, capture mode or video mode, the front-facing camera and/or the rear-facing camera can receive external multimedia data. Each front-facing camera and rear-facing camera can be a fixed optical lens system or have focal length and optical zoom capacity.

The audio component 510 is configured to output and/or input audio signal. For example, the audio component 510 comprises a microphone (MIC); when the device 500 is under an operation mode such as call mode, record mode and speech recognition mode, the microphone is configured to receive external audio signal. The audio signal received may be further stored in the memory 504 or sent out by the communication component 516. In some embodiments, the audio component 510 also comprises a loudspeaker for outputting audio signal.

The I/O interface 512 provides interface for the processor component 502 and peripheral interface components, the peripheral interface components may be a keyboard, a click wheel and buttons, etc. These buttons may include but not limited to: home button, volume button, start button and locking button.

The sensor component 514 comprises one or a plurality of sensors for providing the device 500 with state evaluation from all aspects. For example, the sensor component 514 may detect the on/off state of the device 500, relative positioning of components, for example, the components are the displayer and keypads of the device 500; the sensor component 514 also may detect the position change of the device 500 or a component thereof, the presence or absence of users' touch on the device 500, the direction or acceleration/deceleration of the device 500, and temperature variation of the device 500. The sensor component 514 may also comprise a proximity detector, which is configured to detect the presence of nearby objects in case of no physical touch. The sensor component 514 may also comprise an optical sensor, for example, CMOS or CCD image sensor for imaging. In some embodiments, the sensor component 514 may also comprise an acceleration sensor, a gyro sensor, a magnetic sensor, a pressure sensor, or a temperature sensor.

The communication component 516 is configured for the convenience of wired communication or wired communication between the device 500 and other equipment. The device 500 is available for access to wireless network based on communication standards, for example, WiFi, 2G or 3G, or combination thereof. In an exemplary embodiment, the communication component 516 receives by means of a broadcast channel the broadcast signal or broadcast-related information from external broadcast management systems. In an exemplary embodiment, the communication component 516 also comprises a near field communication (NFC) component for promoting short-range communication. For example, the NFC component may be realized on the basis of Radio Frequency Identification (RFID) Technology, Infrared Data Association (IrDA) Technology, Ultra-wide Bandwidth (UWB) Technology, Bluetooth (BT) Technology and other technologies.

In exemplary embodiments, the device 500 may be realized by one or a plurality of application specific integrated circuits (ASIC), digital signal processors (DSP), digital signal processing equipment (DSPD), programmable logic devices (PLD), field programmable gate arrays (FPGA), controllers, microcontrollers, microprocessors or other electronic components, configured to execute the above methods.

In exemplary embodiments, a non-transitory computer-readable storage medium comprising instructions is also provided, for example, a memory 504 comprising instructions, above instructions may be executed by the processors 518 of the device 500 so as to achieve the above methods. For example, the non-temporary computer-readable storage medium may be ROM, random access memory (RAM), CD-ROM, magnetic tape, floppy disk and optical data storage device, etc.

It will be appreciated that the present invention is not limited to the exact construction that has been described above and illustrated in the accompanying drawings.

## Claims

1. An image segmentation method, comprising:

   establishing (101,201) a saliency model of an image;
   automatically acquiring (102) a foreground sample point and a background sample point of the image according to the saliency model;
   establishing (103) a foreground and background classification model according to the saliency model as well as the foreground sample point and the background sample point;
   segmenting (104) the image according to a predefined graph cut algorithm which segments the image by using the foreground and background classification model and edge information related to pixels, by;
   calculating a foreground similarity (210) of each pixel in the image by using the foreground classification model;
   calculating a background similarity (211) of each pixel in the image by using the background classification model;
   acquiring (212) a similarity between adjacent pixels in the image;
   constructing (213) an undirected graph required for the predefined graph cut algorithm by using a foreground similarity of each pixel, a background similarity of each pixel and a similarity between adjacent pixels; and
   segmenting (214) the undirected graph by using the predefined graph cut algorithm, thus completing segmentation of the image;
   **characterized in that** said constructing (213) comprises;
   constructing (213a) an undirected graph comprising a foreground vertex (S) and a background vertex (T), wherein, a first boundary (s1) is formed by connection of pixel vertexes, a second boundary (s2) is formed by connection of the foreground vertex (S) with any pixel vertex, and a third boundary (s3) is formed by connection of the background vertex (T) with any pixel vertex;
   with regard to each second boundary, determining (213b) the foreground similarity of a pixel corresponding to a pixel vertex connected to the second boundary as a weight value of the second boundary;
   with regard to each third boundary, determining (213c) the background similarity of a pixel corresponding to a pixel vertex connected to the third boundary as a weight value of the third boundary; and
   with regard to each first boundary, determining (213d) the similarity between two pixels corresponding to two pixel vertexes connected to the first boundary as a weight value of the first boundary.

2. The method of claim 1, wherein said acquiring (102) a foreground sample point and a background sample point of the image according to the saliency model comprises:

   calculating (202) saliency values of respective pixels in the image according to the saliency model;
   normalizing (203) the saliency values of the pixels;
   determining (204) pixels whose saliency values normalized are greater than a predefined foreground threshold value as the foreground sample point; and
   determining (205) pixels whose saliency values normalized are smaller than a predefined background threshold value as the background sample point;
   wherein, the predefined foreground threshold value is greater than the predefined background threshold value, and the saliency values normalized are in (0, 1).

3. The method of claim 1, wherein the foreground and background classification model comprises a foreground classification model and a background classification model, and said establishing (103) a foreground and background classification model according to the saliency model as well as the foreground sample point and the background sample point comprises:

establishing a foreground color likelihood model (206) according to the foreground sample point;
establishing a background color likelihood model (207) according to the background sample point;
acquiring the foreground classification model (208) by multiplying the saliency model by the foreground color likelihood model, and the foreground classification model being configured to characterize a pixel as probability of a foreground; and
acquiring the background classification model (209) by multiplying the saliency model by the background color likelihood model, and the background classification model being configured to characterize a pixel as probability of a background.

4. The method of any of claims 1 to 3, wherein said establishing a saliency model (201) of an image comprises:

conducting over-segmentation of the image (201a) by using a predefined over-segmentation algorithm, thus acquiring at least one area, and pixels in the same area having identical color values;
determining (201b) a color value and a center of each of the areas; and
establishing (201c) the saliency model according to color values corresponding to the respective areas and to centers of the respective areas.

5. The method of claim 4, wherein the saliency model is:

$$S_{i1} = \sum_{j-1, j \neq i} w(R_j) D_S(R_i, R_j) D_C(R_i, R_j) \ ,$$

in which, $S_{i1}$ is the saliency value of any pixel in area $R_i$, $w(R_j)$ is the number of pixels in area $R_j$, $D_S(R_i,R_j)$ is configured to represent a metric value of difference of a spatial position between the area $R_i$ and the area $R_j$, $D_C(R_i,R_j)$ is configured to represent a metric value of difference of color between the area $R_i$ and the area $R_j$, N is the total number of areas acquired after over-segmentation of the image, being:

$$, \qquad D_S(R_i, R_j) \quad D_S(R_i, R_j) = \exp(-(Center(R_i) - Center(R_j))^2 / \sigma_s^2)$$

$Center(R_i)$ is the center of the area $R_i$ , $Center(R_j)$ is the center of the area $R_j$, when all coordinates of pixels in the image are normalized in [0, 1], $\sigma_s^2 = 0.4$

6. The method of any of claims 1 to 4, wherein said establishing a saliency model of an image comprises:

classifying (201d) the pixels in the image according to color values of the pixels, classifying those pixels with the same color value as the same color type; and
establishing (201e) the saliency model according to a color value of each color type.

7. The method of claim 6, wherein the saliency model is:

$$S_{i2} = \sum_{j=1, j \neq i}^{N} w(P_j) D_C(P_i, P_j)$$

in which, $w(P_j)$ is the number of pixels in color type $P_j$, $D_C(P_i, P_j)$ is configured to represent a metric value of difference of color between the color type $P_i$ and the color type $P_j$, and N is the total number of areas acquired after over-segmentation of the image.

8. An image segmentation device, comprising:

a first establishment module (302), configured to establish a saliency model of an image;

a sample acquisition module (304), configured to acquire a foreground sample point and a background sample point of the image according to the saliency model;

a second establishment module (306), configured to establish a foreground and background classification model according to the saliency model established by the first establishment module as well as the foreground sample point and the background sample point acquired by the sample acquisition module; and

an image segmentation module (308), configured to segment the image according to a predefined graph cut algorithm which segments the image by using the foreground and background classification model established by the second establishment module and edge information related to pixels;

wherein the image segmentation module (308) comprises:

a second calculation module (408c), configured to calculate a foreground similarity of each pixel in the image by using the foreground classification model;

a third calculation module (408b), configured to calculate a background similarity of each pixel in the image by using the background classification model;

an acquisition module (408c), configured to acquire a similarity between adjacent pixels in the image;

**characterized by** a construction module (408d), configured to construct (213a) an undirected graph comprising a foreground vertex (S) and a background vertex (T), wherein, a first boundary (s1) is formed by connection of pixel vertexes, a second boundary (s2) is formed by connection of the foreground vertex (S) with any pixel vertex, and a third boundary (s3) is formed by connection of the background vertex (T) with any pixel vertex;

a first segmentation module (408e), configured to segment the undirected graph by using the predefined graph cut algorithm, thus completing segmentation of the image;

a construction submodule (408d1), configured to construct an undirected graph required for the predefined graph cut algorithm, the undirected graph comprises a first boundary between a foreground vertex, a background vertex, at least one pixel vertex and two adjacent pixel vertexes, a second boundary between the pixel vertex and the foreground vertex, and a third boundary between the pixel vertex and the background vertex, and pixel vertexes in the undirected graph are corresponding to pixels in the image;

a first determination submodule (408d2), configured to, concerning each second boundary, determine the foreground similarity of a pixel corresponding to a pixel vertex connected to the second boundary as a weight value of the second boundary;

a second determination submodule (408d3), configured to, concerning each third boundary, determine the background similarity of a pixel corresponding to a pixel vertex connected to the third boundary as a weight value of the third boundary; and

a third determination submodule (408d4), configured to, concerning each first boundary, the similarity between two pixels corresponding to two pixel vertexes connected to the first boundary is determined as a weight value of the first boundary.

9. The device of claim 8, wherein the sample acquisition module (304, 404) comprises:

a first calculation module (404a), configured to calculate saliency values of respective pixels in the image according to the saliency model;

a normalization module (404b), configured to normalize the saliency values of the pixels calculated by the first calculation module;

a first determination module (404c), configured to determine pixels whose saliency values normalized by the normalization module are greater than a predefined foreground threshold value as the foreground sample point; and

a second determination module (404d), configured to determine pixels whose saliency values normalized by the normalization module are smaller than a predefined background threshold value as the background sample point;

wherein, the predefined foreground threshold value is greater than the predefined background threshold value, and the saliency values normalized are in (0, 1).

10. The device of claim 8, wherein the foreground and background classification model comprises a foreground classification model and background classification model, and the second establishment module (306,406) comprises:

a first establishment sub-module (406a), configured to establish a foreground color likelihood model according to the foreground sample point;

a second establishment sub-module (406b), configured to establish a background color likelihood model according to the background sample point;

a first multiplication module (406c), configured to multiply a saliency model established by the first establishment module by a foreground color likelihood model established by the first establishment module, thus acquiring the foreground classification model, and the foreground classification model is configured to characterize a pixel as probability of a foreground; and

a second multiplication module (406d), configured to multiply a saliency model established by the first establishment module by a background color likelihood model established by the second establishment module, thus acquiring the background classification model, and the background classification model is configured to characterize a pixel as probability of a background.

11. A computer program product stored on a computer usable medium, comprising computer-readable program means for causing an electronic device to implement the method according to any one of claims 1 to 7.

**Patentansprüche**

1. Bildsegmentierungsverfahren, umfassend:

Erstellen (101, 201) eines Salienzmodells eines Bilds;
automatisches Erlangen (102) eines Vordergrundprobenpunkts und eines Hintergrundprobenpunkts des Bilds gemäß dem Salienzmodell;
Erstellen (103) eines Vordergrund- und Hintergrundklassifizierungsmodells gemäß dem Salienzmodell wie auch dem Vordergrundprobenpunkt und dem Hintergrundprobenpunkt;
Segmentieren (104) des Bilds gemäß einem zuvor definierten Graph-Cut-Algorithmus, der das Bild unter Verwendung des Vordergrund- und
Hintergrundklassifizierungsmodells und von Kanteninformationen, die sich auf Pixel beziehen, durch Folgendes segmentiert:

Berechnen einer Vordergrundähnlichkeit (210) jedes Pixels in dem Bild unter Verwendung des Vordergrundklassifizierungsmodells;
Berechnen einer Hintergrundähnlichkeit (211) jedes Pixels in dem Bild unter Verwendung des Hintergrundklassifizierungsmodells;
Erlangen (212) einer Ähnlichkeit zwischen benachbarten Pixeln in dem Bild;
Konstruieren (213) eines ungerichteten Graphen, der für den zuvor definierten Graph-Cut-Algorithmus erforderlich ist, unter Verwendung einer Vordergrundähnlichkeit jedes Pixels, einer Hintergrundähnlichkeit jedes Pixels und einer Ähnlichkeit zwischen benachbarten Pixeln; und
Segmentieren (214) des ungerichteten Graphen unter Verwendung des zuvor definierten Graph-Cut-Algorithmus, wodurch die Segmentierung des Bilds vervollständigt wird;

**dadurch gekennzeichnet, dass** das Konstruieren (213) Folgendes umfasst:

Konstruieren (213a) eines ungerichteten Graphen, der einen Vordergrundknoten (S) und einen Hintergrundknoten (T) umfasst, wobei eine erste Grenze (s1) durch die Verbindung von Pixelknoten gebildet wird, eine zweite Grenze (s2) durch die Verbindung des Vordergrundknotens (S) mit einem beliebigen Pixelknoten gebildet wird und eine dritte Grenze (s3) durch die Verbindung des Hintergrundknotens (T) mit einem beliebigen Pixelknoten gebildet wird;
hinsichtlich jeder zweiten Grenze, Bestimmen (213b) der Vordergrundähnlichkeit eines Pixels, das einem Pixelknoten entspricht, der mit der zweiten Grenze verbunden ist, als einen Gewichtswert der zweiten Grenze;
hinsichtlich jeder dritten Grenze, Bestimmen (213c) der Hintergrundähnlichkeit eines Pixels, das einem Pixelknoten entspricht, der mit der dritten Grenze verbunden ist, als einen Gewichtswert der dritten Grenze; und
hinsichtlich jeder ersten Grenze, Bestimmen (213d) der Ähnlichkeit zwischen zwei Pixeln, die zwei Pixelknoten entsprechen, die mit der ersten Grenze verbunden sind, als einen Gewichtswert der ersten Grenze.

2. Verfahren nach Anspruch 1, wobei das Erlangen (102) eines Vordergrundprobenpunkts und eines Hintergrundprobenpunkts des Bilds gemäß dem Salienzmodell Folgendes umfasst:

Berechnen (202) von Salienzwerten jeweiliger Pixel in dem Bild gemäß dem Salienzmodell;

Normalisieren (203) der Salienzwerte der Pixel;

Bestimmen (204) von Pixeln, deren normalisierte Salienzwerte größer als ein zuvor definierter Vordergrundschwellenwert sind, als den Vordergrundprobenpunkt; und

Bestimmen (205) von Pixeln, deren normalisierte Salienzwerte kleiner als ein zuvor definierter Hintergrundschwellenwert sind, als den Hintergrundprobenpunkt;

wobei der zuvor definierte Vordergrundschwellenwert größer als der zuvor definierte Hintergrundschwellenwert ist und die normalisierten Salienzwerte in (0, 1) liegen.

3. Verfahren nach Anspruch 1, wobei das Vordergrund- und Hintergrundklassifizierungsmodell ein Vordergrundklassifizierungsmodell und ein Hintergrundklassifizierungsmodell umfasst und das Erstellen (103) eines Vordergrund- und Hintergrundklassifizierungsmodells gemäß dem Salienzmodell wie auch dem Vordergrundprobenpunkt und dem Hintergrundprobenpunkt Folgendes umfasst:

Erstellen eines Vordergrund-Farb-Likelihood-Modells (206) gemäß dem Vordergrundprobenpunkt;

Erstellen eines Hintergrund-Farb-Likelihood-Modells (207) gemäß dem Hintergrundprobenpunkt;

Erlangen des Vordergrundklassifizierungsmodells (208) durch Multiplizieren des Salienzmodells mit dem Vordergrund-Farb-Likelihood-Modell, und wobei das Vordergrundklassifizierungsmodell konfiguriert ist, ein Pixel als Wahrscheinlichkeit eines Vordergrunds zu charakterisieren; und

Erlangen des Hintergrundklassifizierungsmodells (209) durch Multiplizieren des Salienzmodells mit dem Hintergrund-Farb-Likelihood-Modell, und wobei das Hintergrundklassifizierungsmodell konfiguriert ist, ein Pixel als Wahrscheinlichkeit eines Hintergrunds zu charakterisieren.

4. Verfahren nach einem der Ansprüche 1 bis 3, wobei das Erstellen eines Salienzmodells (201) eines Bilds Folgendes umfasst:

Durchführen von Übersegmentierung des Bilds (201a) unter Verwendung eines zuvor definierten Übersegmentierungsalgorithmus, wodurch mindestens ein Bereich erlangt wird, und wobei Pixel in demselben Bereich identische Farbwerte aufweisen;

Bestimmen (210b) eines Farbwerts und einer Mitte jedes der Bereiche; und

Erstellen (201c) des Salienzmodells gemäß Farbwerten, die den jeweiligen Bereichen und Mitten der jeweiligen Bereiche entsprechen.

5. Verfahren nach Anspruch 4, wobei das Salienzmodell Folgendes ist:

$$S_{i1} = \sum_{j=1, j \neq i} w(R_j) D_S(R_i, R_j) D_C(R_i, R_j)$$

wobei $S_{i1}$ der Salienzwert eines beliebigen Pixels in Bereich $R_i$ ist, $w(R_j)$ die Zahl von Pixeln in Bereich $R_j$ ist, $D_S(R_i, R_j)$ konfiguriert ist, einen metrischen Wert der Differenz einer räumlichen Position zwischen dem Bereich $R_i$ und dem Bereich $R_j$ darzustellen, $D_C(R_i, R_j)$ konfiguriert ist, einen metrischen Wert der Differenz der Farbe zwischen dem Bereich $R_i$ und dem Bereich $R_j$ darzustellen, N die Gesamtzahl von Bereichen ist, die nach Übersegmentierung des Bilds erlangt werden, wofür Folgendes gilt:

$$D_S(R_i, R_j)\ D_S(R_i, R_j) = \exp(-(Mitte(R_i) - Mitte(R_j))^2 / \sigma_s^2)$$

wobei $Mitte(R_i)$ die Mitte des Bereichs $R_i$ ist, $Mitte(R_j)$ die Mitte des Bereichs $R_j$ ist, wenn alle Koordinatoren von Pixeln in dem Bild in [0, 1] normalisiert sind, $\sigma_s^2 = 0{,}4.$

6. Verfahren nach einem der Ansprüche 1 bis 4, wobei das Erstellen eines Salienzmodells eines Bilds Folgendes umfasst:

Klassifizieren (201d) der Pixel in dem Bild gemäß Farbwerten der Pixel, wobei jene Pixel mit demselben Farbwert als derselbe Farbtyp klassifiziert werden; und

Erstellen (201e) des Salienzmodells gemäß einem Farbwert jedes Farbtyps.

7. Verfahren nach Anspruch 6, wobei das Salienzmodell Folgendes ist:

$$S_{i2} = \sum_{j=1, j\neq i}^{N} w(P_j) D_C(P_i, P_j)$$

wobei $w(P_j)$ die Zahl von Pixeln in Farbtyp $P_j$ ist, $D_C(P_i, P_j)$ konfiguriert ist, einen metrischen Wert der Differenz der Farbe zwischen dem Farbtyp $P_i$ und dem Farbtyp $P_j$ darzustellen, und N die Gesamtzahl von Bereichen ist, die nach Übersegmentierung des Bilds erlangt werden.

8. Bildsegmentierungsvorrichtung, umfassend:

ein erstes Erstellungsmodul (302), das konfiguriert ist, ein Salienzmodell eines Bilds zu erstellen;
ein Probenerlangungsmodul (304), das konfiguriert ist, einen Vordergrundprobenpunkt und einen Hintergrundprobenpunkt des Bilds gemäß dem Salienzmodell zu erlangen;
ein zweites Erstellungsmodul (306), das konfiguriert ist, ein Vordergrund- und Hintergrundklassifizierungsmodell gemäß dem Salienzmodell, das von dem ersten Erstellungsmodul erstellt wird, wie auch dem Vordergrundprobenpunkt und dem Hintergrundprobenpunkt, die von dem Probenerlangungsmodul erlangt werden, zu erstellen; und
ein Bildsegmentierungsmodul (308), das konfiguriert ist, das Bild gemäß einem zuvor definierten Graph-Cut-Algorithmus zu segmentieren, der das Bild unter Verwendung des Vordergrund- und Hintergrundklassifizierungsmodells, die von dem zweiten Erstellungsmodul erstellt werden, und von Kanteninformationen, die sich auf Pixel beziehen, segmentiert;
wobei das Bildsegmentierungsmodul (308) Folgendes umfasst:

ein zweites Berechnungsmodul (408c), das konfiguriert ist, eine Vordergrundähnlichkeit jedes Pixels in dem Bild unter Verwendung des Vordergrundklassifizierungsmodells zu berechnen;
ein drittes Berechnungsmodul (408b), das konfiguriert ist, eine Hintergrundähnlichkeit jedes Pixels in dem Bild unter Verwendung des Hintergrundklassifizierungsmodells zu berechnen;
ein Erlangungsmodul (408c), das konfiguriert ist, eine Ähnlichkeit zwischen benachbarten Pixeln in dem Bild zu erlangen;
**gekennzeichnet durch** ein Konstruktionsmodul (408d), das konfiguriert ist, einen ungerichteten Graphen, der einen Vordergrundknoten (S) und einen Hintergrundknoten (T) umfasst, zu konstruieren (213a), wobei eine erste Grenze (s1) durch die Verbindung von Pixelknoten gebildet wird, eine zweite Grenze (s2) durch die Verbindung des Vordergrundknotens (S) mit einem beliebigen Pixelknoten gebildet wird und eine dritte Grenze (s3) durch die Verbindung des Hintergrundknotens (T) mit einem beliebigen Pixelknoten gebildet wird;
ein erstes Segmentierungsmodul (408e), das konfiguriert ist, den ungerichteten Graphen unter Verwendung des zuvor definierten Graph-Cut-Algorithmus zu segmentieren, wodurch die Segmentierung des Bilds vervollständigt wird;
ein Konstruktionsuntermodul (408d1), das konfiguriert ist, einen ungerichteten Graphen, der für den zuvor definierten Graph-Cut-Algorithmus erforderlich ist, zu konstruieren, wobei der ungerichtete Graph eine erste Grenze zwischen einem Vordergrundknoten, einem Hintergrundknoten, mindestens einem Pixelknoten und zwei benachbarten Pixelknoten, eine zweite Grenze zwischen dem Pixelknoten und dem Vordergrundknoten und eine dritte Grenze zwischen dem Pixelknoten und dem Hintergrundknoten umfasst und wobei Pixelknoten in dem ungerichteten Graphen Pixel in dem Bild entsprechen;
ein erstes Bestimmungsuntermodul (408d2), das konfiguriert ist, hinsichtlich jeder zweiten Grenze, die Vordergrundähnlichkeit eines Pixels, das einem Pixelknoten entspricht, der mit der zweiten Grenze verbunden ist, als einen Gewichtswert der zweiten Grenze zu bestimmen;
ein zweites Bestimmungsuntermodul (408d3), das konfiguriert ist, hinsichtlich jeder dritten Grenze, die Hintergrundähnlichkeit eines Pixels, das einem Pixelknoten entspricht, der mit der dritten Grenze verbunden ist, als einen Gewichtswert der dritten Grenze zu bestimmen; und
ein drittes Bestimmungsuntermodul (408d4), das konfiguriert ist, hinsichtlich jeder ersten Grenze, die Ähnlichkeit zwischen zwei Pixeln, die zwei Pixelknoten entsprechen, die mit der ersten Grenze verbunden sind, als einen Gewichtswert der ersten Grenze zu bestimmen.

9. Vorrichtung nach Anspruch 8, wobei das Probenerlangungsmodul (304, 404) Folgendes umfasst:

ein erstes Berechnungsmodul (404a), das konfiguriert ist, Salienzwerte jeweiliger Pixel in dem Bild gemäß dem Salienzmodell zu berechnen;

ein Normalisierungsmodul (404b), das konfiguriert ist, die Salienzwerte der Pixel, die von dem ersten Berechnungsmodul berechnet werden, zu normalisieren;

ein erstes Bestimmungsmodul (404c), das konfiguriert ist, Pixel, deren von dem Normalisierungsmodul normalisierte Salienzwerte größer als ein zuvor definierter Vordergrundschwellenwert sind, als den Vordergrundprobenpunkt zu bestimmen; und

ein zweites Bestimmungsmodul (404d), das konfiguriert ist, Pixel, deren von dem Normalisierungsmodul normalisierte Salienzwerte kleiner als ein zuvor definierter Hintergrundschwellenwert sind, als den Hintergrundprobenpunkt zu bestimmen;

wobei der zuvor definierte Vordergrundschwellenwert größer als der zuvor definierte Hintergrundschwellenwert ist und die normalisierten Salienzwerte in (0, 1) liegen.

10. Vorrichtung nach Anspruch 8, wobei das Vordergrund- und Hintergrundklassifizierungsmodell ein Vordergrundklassifizierungsmodell und ein Hintergrundklassifizierungsmodell umfasst und das zweite Erstellungsmodul (306, 406) Folgendes umfasst:

ein erstes Erstellungsuntermodul (406a), das konfiguriert ist, ein Vordergrund-Farb-Likelihood-Modell gemäß dem Vordergrundprobenpunkt zu erstellen;

ein zweites Erstellungsuntermodul (406b), das konfiguriert ist, ein Hintergrund-Farb-Likelihood-Modell gemäß dem Hintergrundprobenpunkt zu erstellen;

ein erstes Multiplikationsmodul (406c), das konfiguriert ist, ein von dem ersten Erstellungsmodul erstelltes Salienzmodell mit einem von dem ersten Erstellungsmodul erstellten Vordergrund-Farb-Likelihood-Modell zu multiplizieren, wodurch das Vordergrundklassifizierungsmodell erlangt wird, und wobei das Vordergrundklassifizierungsmodell konfiguriert ist, ein Pixel als Wahrscheinlichkeit eines Vordergrunds zu charakterisieren; und

ein zweites Multiplikationsmodul (406d), das konfiguriert ist, ein von dem ersten Erstellungsmodul erstelltes Salienzmodell mit einem von dem zweiten Erstellungsmodul erstellten Hintergrund-Farb-Likelihood-Modell zu multiplizieren,

wodurch das Hintergrundklassifizierungsmodell erlangt wird, und wobei das Hintergrundklassifizierungsmodell konfiguriert ist, ein Pixel als Wahrscheinlichkeit eines Hintergrunds zu charakterisieren.

11. Computerprogrammprodukt, das auf einem von einem Computer verwendbaren Medium gespeichert ist, umfassend ein von einem Computer lesbares Programmmittel, um zu bewirken, dass eine elektronische Vorrichtung das Verfahren nach einem der Ansprüche 1 bis 7 implementiert.

**Revendications**

1. Un procédé de segmentation d'image, comprenant :

l'établissement (101, 201) d'un modèle de saillance d'une image,
l'acquisition automatique (102) d'un point d'échantillon de premier plan et d'un point d'échantillon d'arrière-plan de l'image en fonction du modèle de saillance,
l'établissement (103) d'un modèle de classification de premier plan et d'arrière-plan en fonction du modèle de saillance ainsi que du point d'échantillon de premier plan et du point d'échantillon d'arrière-plan,
la segmentation (104) de l'image en fonction d'un algorithme de découpage de graphe prédéfini qui segmente l'image au moyen du modèle de classification de premier plan et d'arrière-plan et d'informations de contour relatives à des pixels, par :

le calcul d'une similarité de premier plan (210) de chaque pixel dans l'image au moyen du modèle de classification de premier plan,
le calcul d'une similarité d'arrière-plan (211) de chaque pixel dans l'image au moyen du modèle de classification d'arrière-plan,
l'acquisition (212) d'une similarité entre des pixels adjacents dans l'image,
la construction (213) d'un graphe non orienté nécessaire à l'algorithme de découpage de graphe prédéfini au moyen d'une similarité de premier plan de chaque pixel, d'une similarité d'arrière-plan de chaque pixel et d'une similarité entre des pixels adjacents, et
la segmentation (214) du graphe non orienté au moyen de l'algorithme de découpage de graphe prédéfini, achevant ainsi la segmentation de l'image,

**caractérisé en ce que** ladite construction (213) comprend :

la construction (213a) d'un graphe non orienté comprenant un sommet de premier plan (S) et un sommet d'arrière-plan (T), où une première limite (s1) est formée par le raccordement de sommets de pixel, une deuxième limite (s2) est formée par le raccordement du sommet de premier plan (S) à tout sommet de pixel, et une troisième limite (s3) est formée par le raccordement du sommet d'arrière-plan (T) à tout sommet de pixel,

en ce qui concerne chaque deuxième limite, la détermination (213b) de la similarité de premier plan d'un pixel correspondant à un sommet de pixel raccordé à la deuxième limite sous la forme d'une valeur de poids de la deuxième limite,

en ce qui concerne chaque troisième limite, la détermination (213c) de la similarité d'arrière-plan d'un pixel correspondant à un sommet de pixel raccordé à la troisième limite sous la forme d'une valeur de poids de la troisième limite, et

en ce qui concerne chaque première limite, la détermination (213d) de la similarité entre deux pixels correspondant à deux sommets de pixel raccordés à la première limite sous la forme d'une valeur de poids de la première limite.

2.  Le procédé selon la Revendication 1, où ladite acquisition (102) d'un point d'échantillon de premier plan et d'un point d'échantillon d'arrière-plan de l'image en fonction du modèle de saillance comprend :

le calcul (202) de valeurs de saillance de pixels respectifs dans l'image en fonction du modèle de saillance,

la normalisation (203) des valeurs de saillance des pixels,

la détermination (204) de pixels dont les valeurs de saillance normalisées sont supérieures à une valeur seuil de premier plan prédéfinie en tant que point d'échantillon de premier plan, et

la détermination (205) de pixels dont les valeurs de saillance normalisées sont inférieures à une valeur seuil d'arrière-plan prédéfinie en tant que point d'échantillon d'arrière-plan,

où la valeur seuil de premier plan prédéfinie est supérieure à la valeur seuil d'arrière-plan prédéfinie, et les valeurs de saillance normalisées se situent dans la plage $(0, 1)$.

3.  Le procédé selon la Revendication 1, où le modèle de classification de premier plan et d'arrière-plan comprend un modèle de classification de premier plan et un modèle de classification d'arrière-plan, et ledit établissement (103) d'un modèle de classification de premier plan et d'arrière-plan en fonction du modèle de saillance ainsi que du point d'échantillon de premier plan et du point d'échantillon d'arrière-plan comprend :

l'établissement d'un modèle de probabilité de couleur de premier plan (206) en fonction du point d'échantillon de premier plan,

l'établissement d'un modèle de probabilité de couleur d'arrière-plan (207) en fonction du point d'échantillon d'arrière-plan,

l'acquisition du modèle de classification de premier plan (208) par la multiplication du modèle de saillance par le modèle de probabilité de couleur de premier plan, et le modèle de classification de premier plan étant configuré de façon à caractériser un pixel en tant que probabilité d'un premier plan, et

l'acquisition du modèle de classification d'arrière-plan (209) par la multiplication du modèle de saillance par le modèle de probabilité de couleur d'arrière-plan, et le modèle de classification d'arrière-plan étant configuré de façon à caractériser un pixel en tant que probabilité d'un arrière-plan.

4.  Le procédé selon l'une quelconque des Revendications 1 à 3, où ledit établissement d'un modèle de saillance (201) d'une image comprend :

la réalisation d'une sur-segmentation de l'image (201a) au moyen d'un algorithme de sur-segmentation prédéfini, faisant ainsi l'acquisition d'au moins une zone, et des pixels dans la même zone possédant des valeurs de couleur identiques,

la détermination (201b) d'une valeur de couleur et d'un centre de chacune des zones, et

l'établissement (201c) du modèle de saillance en fonction de valeurs de couleur correspondant aux zones respectives et aux centres des zones respectives.

5.  Le procédé selon la Revendication 4, où le modèle de saillance est :

$$S_a = \sum_{j=1,j\neq i}^{N} w(R_j)D_s(R_i,R_j)D_C(R_i,R_j) ,$$

où $S_a$ est la valeur de saillance de tout pixel dans la zone $R_i$, $w(R_j)$ est le nombre de pixels dans la zone $R_j$, $D_S(R_i,R_j)$ est configuré de façon à représenter une valeur métrique d'une différence d'une position spatiale entre la zone $R_i$ et la zone $R_j$, $D_C(R_i,R_j)$ est configuré de façon à représenter une valeur métrique d'une différence de couleur entre la zone $R_i$ et la zone $R_j$, N est le nombre total de zones acquises après la sur-segmentation de l'image, étant :

$$D_s(R_i,R_j) \quad D_s(R_i,R_j) = \exp(-(Center(R_i) - Center(R_j))^2 / \sigma_s^2)$$

$Center(R_i)$ est le centre de la zone $R_i$, $Center(R_j)$ est le centre de la zone $R_j$, lorsque la totalité des coordonnées de pixels dans l'image sont normalisées dans [0, 1], $\sigma_s^2 = 0,4.$

6. Le procédé selon l'une quelconque des Revendications 1 à 4, où ledit établissement d'un modèle de saillance d'une image comprend :

le classement (201d) des pixels dans l'image en fonction de valeurs de couleur des pixels, les pixels avec la même valeur de couleur étant classés sous la forme du même type de couleur, et
l'établissement (201e) du modèle de saillance en fonction d'une valeur de couleur de chaque type de couleur.

7. Le procédé selon la Revendication 6, où le modèle de saillance est :

$$S_a = \sum_{j=1,j\neq i}^{N} w(P_j)D_C(P_i,P_j)$$

où $w(P_j)$ est le nombre de pixels du type de couleur $P_j$, $D_C(P_i,P_j)$ est configuré de façon à représenter une valeur métrique d'une différence de couleur entre le type de couleur $P_i$ et le type de couleur $P_j$, et N est le nombre total de zones acquises après la sur-segmentation de l'image.

8. Un dispositif de segmentation d'images, comprenant :

un premier module d'établissement (302), configuré de façon à établir un modèle de saillance d'une image,
un module d'acquisition d'échantillons (304), configuré de façon à acquérir un point d'échantillon de premier plan et un point d'échantillon d'arrière-plan de l'image en fonction du modèle de saillance,
un deuxième module d'établissement (306), configuré de façon à établir un modèle de classification de premier plan et d'arrière-plan en fonction du modèle de saillance établi par le premier module d'établissement ainsi que du point d'échantillon de premier plan et du point d'échantillon d'arrière-plan acquis par le module d'acquisition d'échantillons, et
un module de segmentation d'image (308), configuré de façon à segmenter l'image en fonction d'un algorithme de découpage de graphe prédéfini qui segmente l'image au moyen du modèle de classification de premier plan et d'arrière-plan établi par le deuxième module d'établissement et d'informations de contour relatives à des pixels, où le module de segmentation d'image (308) comprend :

un deuxième module de calcul (408c), configuré de façon à calculer une similarité de premier plan de chaque pixel dans l'image au moyen du modèle de classification de premier plan,
un troisième module de calcul (408b), configuré de façon à calculer une similarité d'arrière-plan de chaque pixel dans l'image au moyen du modèle de classification d'arrière-plan,
un module d'acquisition (408c), configuré de façon à acquérir une similarité entre des pixels adjacents dans l'image,
**caractérisé par** un module de construction (408d), configuré de façon à construire (213a) un graphe non orienté comprenant un sommet de premier plan (S) et un sommet d'arrière-plan (T), où une première limite (s1) est formée par le raccordement de sommets de pixel, une deuxième limite (s2) est formée par le raccordement du sommet de premier plan (S) à tout sommet de pixel, et une troisième limite (s3) est formée par le raccordement du sommet d'arrière-plan (T) à tout sommet de pixel,

un premier module de segmentation (408e), configuré de façon à segmenter le graphe non orienté au moyen de l'algorithme de découpage de graphe prédéfini, achevant ainsi la segmentation de l'image,

un sous-module de construction (408d1), configuré de façon à construire un graphe non orienté nécessaire à l'algorithme de découpage de graphe prédéfini, le graphe non orienté comprenant une première limite entre un sommet de premier plan, un sommet d'arrière-plan, au moins un sommet de pixel et deux sommets de pixel adjacents, une deuxième limite entre le sommet de pixel et le sommet de premier plan et une troisième limite entre le sommet de pixel et le sommet d'arrière-plan, et des sommets de pixel dans le graphe non orienté correspondent à des pixels dans l'image,

un premier sous-module de détermination (408d2), configuré de façon à, concernant chaque deuxième limite, déterminer la similarité de premier plan d'un pixel correspondant à un sommet de pixel raccordé à la deuxième limite sous la forme d'une valeur de poids de la deuxième limite,

un deuxième sous-module de détermination (408d3), configuré de façon à, concernant chaque troisième limite, déterminer la similarité d'arrière-plan d'un pixel correspondant à un sommet de pixel raccordé à la troisième limite sous la forme d'une valeur de poids de la troisième limite, et

un troisième sous-module de détermination (408d4), configuré de façon à, concernant chaque première limite, déterminer la similarité entre deux pixels correspondant à deux sommets de pixel raccordés à la première limite sous la forme d'une valeur de poids de la première limite.

9. Le dispositif selon la Revendication 8, où le module d'acquisition d'échantillons (304, 404) comprend :

un premier module de calcul (404a), configuré de façon à calculer des valeurs de saillance de pixels respectifs dans l'image en fonction du modèle de saillance,

un module de normalisation (404b), configuré de façon à normaliser les valeurs de saillance des pixels calculées par le premier module de calcul,

un premier module de détermination (404c), configuré de façon à déterminer des pixels dont les valeurs de saillance normalisées par le module de normalisation sont supérieures à une valeur seuil de premier plan prédéfinie en tant que point d'échantillon de premier plan, et

un deuxième module de détermination (404d), configuré de façon à déterminer des pixels dont les valeurs de saillance normalisées par le module de normalisation sont inférieures à une valeur seuil d'arrière-plan prédéfinie en tant que point d'échantillon d'arrière-plan,

où la valeur seuil de premier plan prédéfinie est supérieure à la valeur seuil d'arrière-plan prédéfinie, et les valeurs de saillance normalisées se situent dans la plage (0, 1).

10. Le dispositif selon la Revendication 8, où le modèle de classification de premier plan et d'arrière-plan comprend un modèle de classification de premier plan et un modèle de classification d'arrière-plan, et le deuxième module d'établissement (306, 406) comprend :

un premier sous-module d'établissement (406a), configuré de façon à établir un modèle de probabilité de couleur de premier plan en fonction du point d'échantillon de premier plan,

un deuxième sous-module d'établissement (406b), configuré de façon à établir un modèle de probabilité de couleur d'arrière-plan en fonction du point d'échantillon d'arrière-plan,

un premier module de multiplication (406c), configuré de façon à multiplier un modèle de saillance établi par le premier module d'établissement par un modèle de probabilité de couleur de premier plan établi par le premier module d'établissement, faisant ainsi l'acquisition du modèle de classification de premier plan, et le modèle de classification de premier plan est configuré de façon à caractériser un pixel en tant que probabilité d'un premier plan, et

un deuxième module de multiplication (406d), configuré de façon à multiplier un modèle de saillance établi par le premier module d'établissement par un modèle de probabilité de couleur d'arrière-plan établi par le deuxième module d'établissement, faisant ainsi l'acquisition du modèle de classification d'arrière-plan, et le modèle de classification d'arrière-plan est configuré de façon à caractériser un pixel en tant que probabilité d'un arrière-plan.

11. Un produit de programme informatique conservé en mémoire sur un support utilisable par ordinateur, comprenant un moyen de programme lisible par ordinateur destiné à amener un dispositif électronique à mettre en oeuvre le procédé selon l'une quelconque des Revendications 1 à 7.

A saliency model of an image is established —101

A foreground sample point and a background sample point of the image is acquired according to the saliency model —102

A foreground and background classification model is established according to the saliency model as well as the foreground sample point and the background sample point —103

The image is segmented according to a predefined graph cut algorithm, and specifically the image is segmented according to the predefined graph cut algorithm by using the foreground and background classification model and edge information related to pixels —104

Fig. 1

A saliency model of an image is established ⎯201

Saliency values of pixels in the image are calculated according to the saliency model ⎯202

Saliency values of pixels are normalized ⎯203

Pixels whose saliency values normalized are greater than a predefined foreground threshold value are determined as the foreground sample point ⎯204

Pixels whose saliency values normalized are smaller than a predefined background threshold value are determined as the background sample point ⎯205

A foreground color likelihood model is established according to the foreground sample point ⎯206

A background color likelihood model is established according to the background sample point ⎯207

The foreground classification model is acquired by multiplying the saliency model by the foreground color likelihood model, and the foreground classification model is configured to characterize a pixel as probability of a foreground ⎯208

A background classification model is acquired by multiplying the saliency model by the background color likelihood model, and the background classification model is configured to characterize a pixel as probability of a background ⎯209

A foreground similarity of each pixel in the image is calculated by using the foreground classification model ⎯210

A background similarity of each pixel in the image is calculated by using the background classification model ⎯211

A similarity between adjacent pixels in the image is acquired ⎯212

An undirected graph required for the predefined graph cut algorithm is constructed by using the foreground similarity of each pixel, the background similarity of each pixel and the similarity between adjacent pixels ⎯213

The undirected graph is segmented by using the predefined graph cut algorithm, thus completing segmentation of the image ⎯214

Fig. 2A

Over-segmentation of the image is conducted by using a predefined over-segmentation algorithm, thus acquiring at least one area, and pixels in the same area have identical color values ⟋201a

A color value and a center of each of the areas are determined ⟋201b

A saliency model is established according to color values mapped to areas and to centers of areas ⟋201c

Fig. 2B

Pixels in the image are classified according to color values of pixels, and those pixels with the same color value are classified as the same color type ⌐201d

A saliency model is established according to the color value of each color type ⌐201e

## Fig. 2C

A undirected graph required for the predefined graph cut algorithm is constructed, the undirected graph comprises a first boundary between a foreground vertex, a background vertex, at least one pixel vertex and two adjacent pixel vertexes, a second boundary between the pixel vertex and the frontground vertex, and a third boundary between the pixel vertex and the background vertex, and pixel vertexes in the undirected graph are mapped to pixels in the image ⌐ 213a

Concerning each a second boundary, a foreground similarity of a pixel mapped to a pixel vertex connected to the second boundary is determined as a weight value of the second boundary ⌐213b

Concerning each a third boundary, a background similarity of a pixel mapped to a pixel vertex connected to the third boundary is determined as a weight value of the third boundary ⌐ 213c

Concerning each a first boundary, a similarity between two pixels mapped to two pixel vertexes connected to the first boundary is determined as a weight value of the first boundary ⌐ 213d

## Fig. 2D

Pixel vertex

s1

s2

s3

Fig. 2E

First establishment module — 302

Sample acquisition module — 304

Second establishment module — 306

Image segmentation module — 308

Fig. 3

Fig. 4

500

502

504

Memory

Processor
component

Communicati
on component

516

506

Power supply
component

Processor

508

Multimedia
component

518

510

Audio
component

S ensor
component

514

I/O
interface

512

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Automatic object segmentation with salient color model. **CHIEH-CHI KAO et al.** 2011 IEEE International Conference on Multimedia and Expo (ICME). IEEE, 11 July 2011, 1-6

- Automatic Object Extraction in Nature Scene Based on Visual Saliency and Super Pixels. **ZHAOHUI WANG et al.** Artificial Intelligence and Computational Intelligence. Springer, 26 October 2012, 547-554